**Europäisches Patentamt**

**European Patent Office**

**Office européen des brevets**

(19)

(11) Numéro de publication : **0 479 651 B1**

(12) **FASCICULE DE BREVET EUROPEEN**

(45) Date de publication du fascicule du brevet :
08.06.94 Bulletin 94/23

(51) Int. Cl.⁵ : **F15B 15/16**

(21) Numéro de dépôt : **91402574.7**

(22) Date de dépôt : **26.09.91**

(54) **Vérin télescopique.**

(30) Priorité : **03.10.90 FR 9012202**

(43) Date de publication de la demande :
**08.04.92 Bulletin 92/15**

(45) Mention de la délivrance du brevet :
**08.06.94 Bulletin 94/23**

(84) Etats contractants désignés :
**BE DE GB IT**

(56) Documents cités :
**FR-A- 1 478 447
FR-A- 2 124 071
GB-A- 1 546 090**

(73) Titulaire : **HYDRIS SOCIETE ANONYME
Z.I. Bellevue,
B.P. 37
F-35220 Chateaubourg (FR)**

(72) Inventeur : **Tortellier, Christian
Le Ponloup,
Servon sur Vilaine
F-35530 Noyal sur Vilaine (FR)**

(74) Mandataire : **Hoisnard, Jean-Claude et al
Cabinet Beau de Loménie
158, rue de l'Université
F-75340 Paris Cédex 07 (FR)**

## Description

L'invention est relative à un vérin télescopique. Lorsqu'il est nécessaire d'obtenir une longueur de télescopage importante au moyen d'un vérin, deux solutions sont possibles : ou bien, choisir un vérin comportant un seul cylindre et un seul piston, et une longueur excessive, ou bien choisir un vérin comportant plusieurs cylindres et plusieurs pistons imbriqués les uns dans les autres, aptes à être déployés les uns par rapport aux autres, la longueur d'un tel vérin en configuration rétractée étant inférieure à la longueur du vérin à un seul cylindre et son coût très supérieur ; la réalisation d'un tel vérin est industriellement compliquée.

De plus, les vérins à plusieurs cylindres connus à ce jour ont, dans leur configuration rétractée, une longueur encore importante.

L'invention entend remédier à cet état de chose afin de proposer un vérin d'un nouveau type qui sera, à la fois, peu coûteux et facile à réaliser, et, dont la longueur, dans sa configuration rétractée, sera inférieure à celle des vérins connus les moins encombrants.

L'invention est donc relative à un vérin comme décrit dans GB-A-1546090 qui comporte : un premier cylindre comportant lui-même deux fonds extrêmes ; un premier piston monté coulissant par rapport audit premier cylindre ; une première tige de piston solidaire dudit premier piston vis-à-vis du coulissement du premier piston par rapport au premier cylindre et comportant un évidement cylindrique interne constituant un deuxième cylindre, ce deuxième cylindre comportant lui-même deux fonds extrêmes ; un deuxième piston monté coulissant par rapport au deuxième cylindre ; une deuxième tige de piston solidaire du deuxième piston vis-à-vis du coulissement du deuxième piston par rapport au deuxième cylindre ; et, deux conduits principaux de fluide, ménagés dans le corps du premier cylindre et débouchant à l'intérieur dudit premier cylindre à proximité desdits deux fonds extrêmes de ce premier cylindre.

Selon l'invention, d'une part, la première tige de piston traverse les deux dits fonds du premier cylindre, d'autre part, le premier piston est unique et est disposé dans la zone médiane de la première tige de piston et est sensiblement équidistant des deux dits fonds du deuxième cylindre.

Les avantageuses dispositions suivantes sont, en outre, de préférence adoptées :
- le plan transversal médian perpendiculaire à l'axe de la première tige de piston et équidistant des deux fonds du deuxième cylindre passe par le premier piston ;
- deux conduits internes sont ménagés dans la première tige de piston et débouchent, le premier de ces deux conduits internes, d'une part, à proximité d'un premier côté du premier piston, d'autre part, à proximité d'un premier des deux fonds du deuxième cylindre, et, le deuxième conduit interne, d'une part, à proximité du deuxième côté dudit premier piston, d'autre part, à proximité du deuxième des deux fonds du deuxième cylindre ;
- les deux conduits principaux débouchent à l'intérieur du premier cylindre, l'un à proximité de l'un des deux fonds dudit premier cylindre, l'autre à proximité de l'autre fond du premier cylindre.

L'avantage principal de l'invention réside dans la réalisation d'un vérin compact, simple, facile à réaliser et apte à procurer une course totale importante.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :
- la figure 1 est une coupe axiale d'un vérin conforme à l'invention ; et,
- la figure 2 est une vue représentant, dans trois configurations distinctes, et en coupe axiale, le vérin de la figure 1.

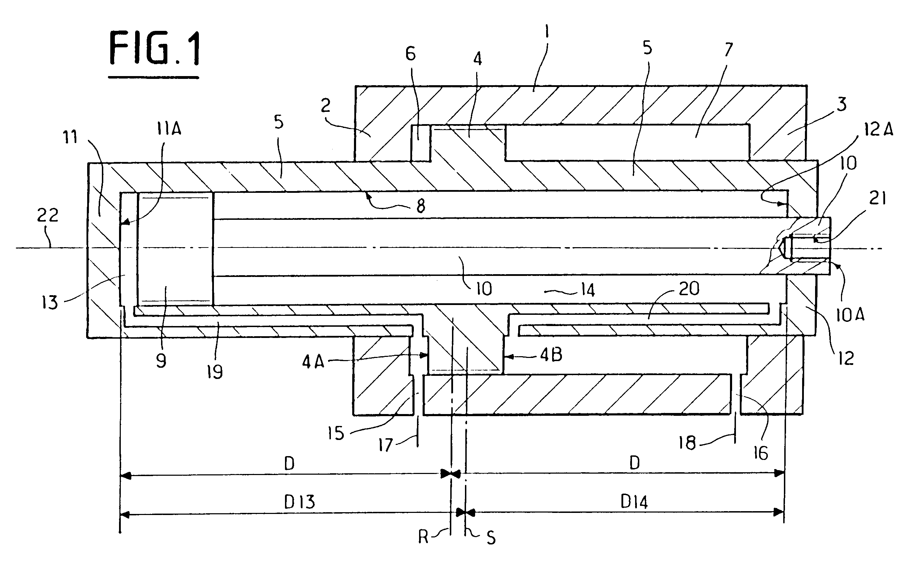

Le vérin de la figure 1 comprend :
- un premier cylindre 1, muni de deux fonds extrêmes 2 et 3 ;
- un premier piston 4, qui est monté coulissant à l'intérieur du premier cylindre 1 ;
- une première tige de piston 5, dont est solidaire le premier piston 4, qui s'étend de part et d'autre dudit premier piston 4 et traverse les deuxdits fonds 2 et 3, et qui, en coopération avec le premier piston 4 définit, à l'intérieur du premier cylindre 1, deux chambres 6 et 7 de travail d'un fluide ;
- un deuxième cylindre 8, qui est constitué par la première tige de piston 5 elle-même, et qui est délimité par un évidement axial longitudinal que comporte cette première tige de piston 5 et ledit premier piston 4, et par deux fonds extrêmes 11,12, respectivement, dudit deuxième cylindre ;
- un deuxième piston 9, qui est monté coulissant à l'intérieur du deuxième cylindre 8 ;
- une deuxième tige de piston 10, qui est solidaire du deuxième piston 9, qui s'étend d'un seul côté dudit deuxième piston et traverse le fond 12 du deuxième cylindre 8, et qui, en coopération avec le deuxième cylindre 8, ses fonds 11 et 12 et le deuxième piston 9, définit à l'intérieur du deuxième cylindre deux chambres de travail 13,14 ;
- deux conduits principaux de fluide 15,16, qui traversent la paroi du premier cylindre 1 et débouchent à l'intérieur du premier cylindre, dans les chambres 6,7, à proximité des fonds 2,3 et sont susceptibles d'être reliés à des conduits extérieurs de fluide 17,18, respectivement ;

- deux conduits internes 19,20, qui sont ménagés dans l'épaisseur de la première tige de piston 5, un premier 19 de ces conduits internes débouchant à proximité du premier piston 4, dans la chambre 6, et à proximité du fond 11 dans la chambre 13, reliant en permanence ces chambres 6 et 13, l'autre conduit interne 20 débouchant à proximité du premier piston 4, dans la chambre 7, et, à proximité du fond 12, dans la chambre 14, reliant en permanence ces chambres 7 et 14.

Un taraudage 21, réalisé dans l'extrémité externe 10A de la deuxième tige de piston 10 permet la fixation de celle-ci sur une structure.

A noter que le plan transversal R, perpendiculaire à l'axe 22 du vérin, et équidistant des faces internes 11A et 12A des fonds 11 et 12 (distances D), passe à travers le premier piston 4, alors que le plan transversal S, perpendiculaire à l'axe 22, qui est équidistant des deux faces 4A,4B du premier piston 4, est sensiblement équidistant des faces 11A,12A (distance D13 voisine de, éventuellement égale à la distance D14).

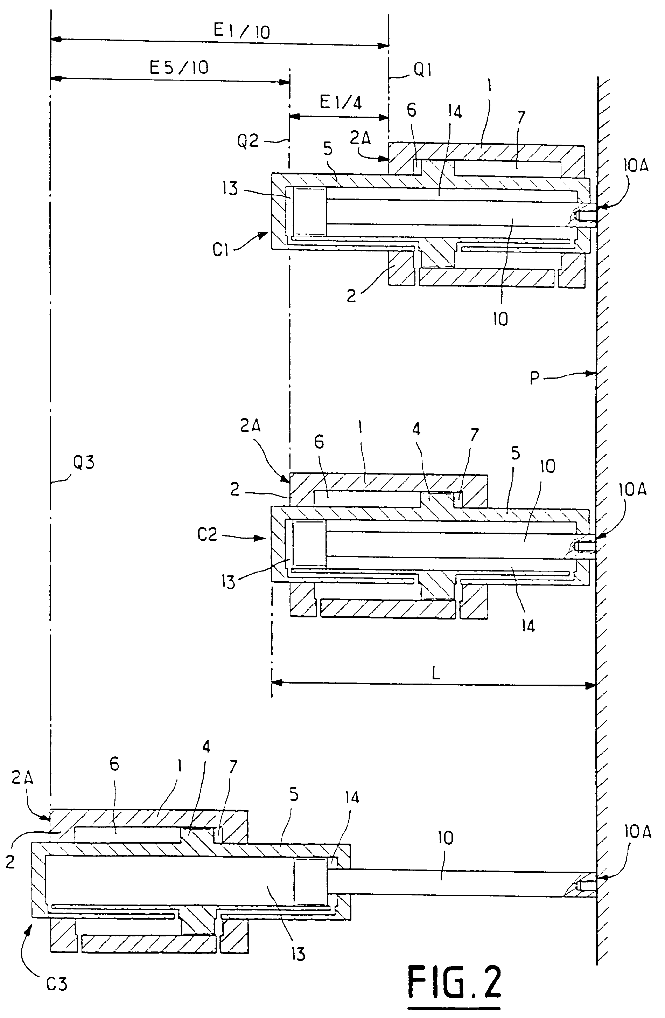

Sur la figure 2, l'extrémité externe 10A de la deuxième tige de piston 10 étant contenue, dans les trois configurations représentées du vérin, dans un même plan P, le premier cylindre 1 occupe les positions distinctes suivantes :

- dans la configuration C1, les chambres 6 et 13 ont leurs volumes minimaux, le vérin est complètement rétracté et a une longueur hors tout L ; la face externe 2A du fond 2 du premier cylindre est contenue dans le plan Q1 ;
- dans la configuration suivante C2, le volume de la chambre 13 reste minimal, mais celui de la chambre 6 est maximal, le premier cylindre 1 s'est déplacé, par rapport au premier piston 4 de la course maximale E 1/4 possible par rapport au premier piston 4, et sa face externe 2A du fond 2 est maintenant contenue dans le plan Q2 ;
- enfin, dans la configuration C3, les volumes des chambres 6 et 13 sont maximaux, le vérin étant en complète extension, et la face externe 2A du fond 2 du premier cylindre, contenue dans le plan Q3, étant écartée de sa précédente position de la figure 2 de la valeur de la course maximale E5/10 de la première tige de piston 5 par rapport à la deuxième tige de piston 10, et le premier cylindre 1 s'étant déplacé par rapport à la deuxième tige de piston 10, entre la configuration C1 et la configuration C3, de la course totale E1/10, avec, bien entendu :

$$E1/10 = E1/4 + E5/10.$$

L'intérêt du vérin qui vient d'être décrit est d'obtenir une valeur E1/10 importante avec une valeur L relativement petite. A noter, dans la réalisation représentée que E1/10 est supérieure à L (en fait, ici, E1/10 = 1,06 L). Il convient de noter également que le vérin est simple, ne comportant aucun clapet permettant d'alimenter séquentiellement les chambres les unes après les autres : ici, le fluide se répartit sans restriction entre les chambres 6 et 13, d'une part, entre les chambres 7 et 14, d'autre part. La position particulière du premier piston 4, sensiblement équidistant des fonds 11 et 12, c'est-à-dire des extrémités de la première tige de piston 5, rend possible son déplacement d'un côté ou de l'autre du premier piston 4, alors même que la course E 5/10 correspond à la longueur totale, importante, de la première tige de piston 5.

L'invention n'est pas limitée aux réalisations décrites, mais en couvre au contraire toutes les variantes qui pourraient lui être apportées sans sortir de son cadre, ni de son esprit.

## Revendications

1. Vérin comportant :
   - un premier cylindre (1) comportant lui-même deux fonds extrêmes (2,3) ;
   - un premier piston (4) monté coulissant par rapport audit premier cylindre ;
   - une première tige de piston (5) solidaire dudit premier piston vis-à-vis du coulissement du premier piston par rapport au premier cylindre et comportant un évidement cylindrique interne constituant un deuxième cylindre (8), ce deuxième cylindre comportant lui-même deux fonds extrêmes (11,12) ;
   - un deuxième piston (9) monté coulissant par rapport au deuxième cylindre (8) ;
   - une deuxième tige de piston (10) solidaire du deuxième piston vis-à-vis du coulissement du deuxième piston par rapport au deuxième cylindre ; et,
   - deux conduits principaux de fluide (15,16), ménagés dans le corps du premier cylindre (1) et débouchant à l'intérieur dudit premier cylindre à proximité desdits deux fonds extrêmes (2,3) de ce premier cylindre ;

   caractérisé en ce que :

   a) la première tige de piston (5) traverse les deux dits fonds (2,3) du premier cylindre (1), et,

   b) le premier piston (4) est unique et est disposé dans la zone médiane (R) de la première tige de piston (5) et est sensiblement équidistant des deux dits fonds (11, 12)) du deuxième cylindre (8).

2. Vérin selon la revendication 1, caractérisé en ce que le plan transversal médian (R) perpendiculaire à l'axe (22) de la première tige de piston (S) et équidistant (D) des deux fonds (11,12) du deuxième cylindre (8) passe par le premier piston.

3. Vérin selon l'une quelconque des revendications 1 et 2, caractérisé en ce que deux conduits internes (19,20) sont ménagés dans la première tige de piston (5) et débouchent, le premier (19) de ces deux conduits internes, d'une part à proximité d'un premier côté (4A) du premier piston (4), d'autre part à proximité d'un premier (11) des deux fonds du deuxième cylindre (8), et, le deuxième conduit interne (20), d'une part, à proximité du deuxième côté (4B) dudit premier piston (4), d'autre part, à proximité du deuxième (12) des deux fonds du deuxième cylindre (8).

4. Vérin selon l'une quelconque des revendications 1 à 3, caractérisé en ce que les deux conduits principaux (15,16) débouchent à l'intérieur du premier cylindre (4), l'un (15) à proximité de l'un (2) des deux fonds dudit premier cylindre (1), l'autre (16) à proximité de l'autre fond (3) du premier cylindre.

**Patentansprüche**

1. Zylinder umfassend:
   - eine erste Trommel (1), die selbst zwei äußere Böden (2,3) aufweist;
   - einen ersten, bezüglich der ersten Trommel gleitend montierten Kolben (4);
   - eine erste Kolbenstange (5), die fest mit dem ersten Kolben gegenüber dem Gleiten des ersten Kolbens bezüglich der ersten Trommel verbunden ist und einen zylindrischen Innenraum aufweist, der eine zweite Trommel (8) bildet, wobei diese zweite Trommel selbst zwei Außenböden (11,12) aufweist;
      einen zweiten, bezüglich der zweiten Trommel (8) gleitend montierten Kolben (9);
      eine zweite Kolbenstange (10), die fest mit dem zweiten Kolben gegenüber dem Gleiten des zweiten Kolbens bezüglich der zweiten Trommel verbunden ist; und
   - zwei im Körper der ersten Trommel (1) vorgesehene Hauptleitungen (15,16) für Fluid, die im Innern der ersten Trommel nahe den beiden Außenböden (2,3) dieser ersten Trommel münden,
   dadurch gekennzeichnet, daß:
      a) die erste Kolbenstange (5) durch die beiden genannten Böden (2,3) der ersten Trommel (1) führt und
      b) der erste Kolben (4) einzeln und im Mittelbereich (R) der ersten Kolbenstange (5) und im wesentlichen in gleicher Entfernung von den beiden Böden (11,12) der zweiten Trommel (8) angeordnet ist.

2. Zylinder nach Anspruch 1, dadurch gekennzeichnet, daß die mittlere, zur Achse (22) der ersten Kolbenstange (5) und in gleicher Entfernung (D) von den beiden Böden (11,12) der zweiten Trommel (8) liegende Querebene (R) durch den ersten Kolben führt;

3. Zylinder nach einem der Ansprüche 1 und 2, dadurch gekennzeichnet, daß in der ersten Kolbenstange (5) zwei Innenleitungen (19,20) vorgesehen sind, von denen die erste (19) zum einen nahe einer ersten Seite (4A) des ersten Kolbens (4) und zum anderen nahe einem ersten (11) der beiden Böden der zweiten Trommel (8) und von denen die zweite Leitung (20) zum einen nahe der zweiten Seite (4B) des ersten Kolbens (4) und zum anderen nahe dem zweiten (12) der beiden Böden der zweiten Trommel (8) mündet.

4. Zylinder nach einem der Ansprüche 1 bis 3, dadurch gekennzeichnet, daß die beiden Hauptleitungen (15,16) im Inneren der ersten Trommel (4) münden, und zwar die eine (15) nahe dem einen (2) der beiden Böden der ersten Trommel (1) und die andere (16) nahe dem anderen Boden (3) der ersten Trommel.

**Claims**

1. Actuator comprising:
   - a first cylinder (1) itself comprising two end bases (2, 3);
   - a first piston (4) mounted to slide relative to the said first cylinder;
   - a first piston rod (5) integral with the said first piston with respect to the sliding of the first piston relative to the first cylinder and comprising an inner cylindrical recess forming a second cylinder (8), this second cylinder itself comprising two end bases (11, 12);
   - a second piston (9) mounted to slide relative to the second cylinder (8);
   - a second piston rod (10) integral with the second piston with respect to the sliding of the second piston relative to the second cylinder, and
   - two main fluid conduits (15, 16) formed in the body of the first cylinder (1) and opening in the interior of the said first cylinder in the vicinity of the said end bases (2, 3) of this first cylinder;

characterised in that:

    a) the first piston rod (5) traverses the two said bases (2, 3) of the first cylinder (1), and
    b) the first piston (4) is unique and is disposed in the central zone (R) of the first piston rod (5) and is substantially equidistant from the two said bases (11, 12) of the second cylinder (8).

2. Actuator according to claim 1, characterised in that the central transverse plane (R) perpendicular to the axis (22) of the first piston rod (S) and equidistant (D) from the two bases (11, 12) of the second cylinder (8) passes through the first piston.

3. Actuator according to either of claims 1 and 2, characterised in that two internal conduits (19, 20) are formed in the first piston rod (5), the first (19) of these two internal conduits opening, on the one hand, in the vicinity of a first side (4A) of the first piston (4) and, on the other hand, in the vicinity of a first (11) of the two bases of the second cylinder (8) and the second internal conduit (20) opening, on the one hand, in the vicinity of the second side (4B) of the said first piston (4) and, on the other hand, in the vicinity of the second (12) of the two bases of the second cylinder (8).

4. Actuator according to any one of claims 1 to 3, characterised in that the two main conduits (15, 16) open in the interior of the first cylinder (4), one (15) in the vicinity of one (2) of the two bases of the said first cylinder (1) and the other (16) in the vicinity of the other base (3) of the first cylinder.

FIG.1

EP 0 479 651 B1

FIG.2